# EUROPEAN PATENT SPECIFICATION

(11) **EP 2 634 518 B1**
(45) Date of publication and mention of the grant of the patent: **08.04.2015**
(21) Application number: 13157014.5
(22) Date of filing: 27.02.2013
(51) Int. Cl.: F26B 15/12, A21C 9/02

(54) **Group and method for moving drying canes for long pasta and drying apparatus with such a group**
Anordnung und Verfahren für die Bewegung von Trocknungsstangen für lange Pasta und Trocknungsvorrichtung mit einer solchen Anordnung
Assemblage et méthode pour déplacer des barres de séchage pour pâtes longues et dispositif de séchage comprenant un tel assemblage

(30) Priority: 28.02.2012 IT MI20120304
(43) Date of publication of application: 04.09.2013
(73) Proprietor: Fava S.p.A., 44042 Cento FE (IT)
(72) Inventor: Fava, Enrico, 44042 CENTO (FE) (IT); Barozzi, Armando, 51030 SERRAVALLE PISTOIESE (PT) (IT); Benatti, Davide, 44047 SAN CARLO (FE) (IT)
(74) Representative: Lotti, Giorgio

(56) References cited:
- CH-A- 325 714
- FR-A- 1 027 391
- FR-A- 1 240 800
- US-A- 2 741 357
- US-A- 3 472 354

## Description

The present invention refers to a group and to a method for moving drying canes of long pasta in drying apparatuses, in particular of the multi-plane type. Currently there are known drying apparatuses inside which the canes that support the pasta are moved.

Such known apparatuses usually comprise four distinct advancing tracts of the canes in series, arranged in succession or on planes laid on upon the other, known as "incartamento", drying, stabilizing and cooling. Inside each advancing tract the pasta is moved forward in environments with different temperature and humidity conditions.

The advancing of the canes along such environments can be carried out through racks or through chains. Solutions with a rack offer the advantage that the loading upstream of the canes and the discharging thereof downstream towards a subsequent environment takes place spontaneously in a synchronised manner without the need for particular provisions.

Therefore, racks in general are clean and very reliable members but they are more complex to mount with respect to chains, which, however, in the current state of the art have various limitations.

On the other hand, solutions that provide for movement of canes with a chain are much simpler to install.

In order to prevent possible jamming and blocks in the supply of the canes, all known solutions with movement using a chain have special provisions aimed precisely at synchronising the discharging step with the loading step of the canes.

A first type of known apparatus using a chain provides for mechanically connecting together the various pinions present by means of a common drive shaft from which the control of the motion is taken along the entire apparatus.

Such a solution, however, is complex to make and also has the drawback of kinematically constraining the various treatment environments of the pasta.

In other words, with such a solution in emergency transient conditions where it was necessary to stop just one advancing tract, the apparatus is also blocked in areas where there is no need to stop or slow down the canes.

All of this is at the expense of the technological flexibility and therefore the quality of the product.

In such apparatuses the elongation or natural stretching of the chains is absorbed thanks to the presence of special compensation sacs.

A different known solution of movement using a chain consists in providing a chain-tightening device mounted on a mobile slide integral with the idle pinion of the chain for transporting to the advancing plane below.

US2741357 discloses a group for moving drying canes according to the preamble of claim 1 and a corresponding method for moving drying canes. In general, therefore, there is not currently a solution on the market for the synchronisation of the loading and discharging of the drying canes moved with a chain that on the one hand offers kinematic independence between the various advancing environments, ensuring the maximum technological flexibility necessary to manage emergency transient situations, and on the other hand does not require regular interventions for maintenance or resetting of

the initial work conditions.

The purpose of the present invention is indeed to make a group for moving drying canes for long pasta through chains and a drying apparatus with such a group capable of solving the aforementioned drawbacks of the prior art in an extremely simple, cost-effective and particularly functional manner.

These purposes according to the present invention are accomplished by making a group and a method for moving drying canes for long pasta and a drying apparatus with such a group as respectively outlined in claims 1, 6 and 10.

Further characteristics of the invention are highlighted by the dependent claims.

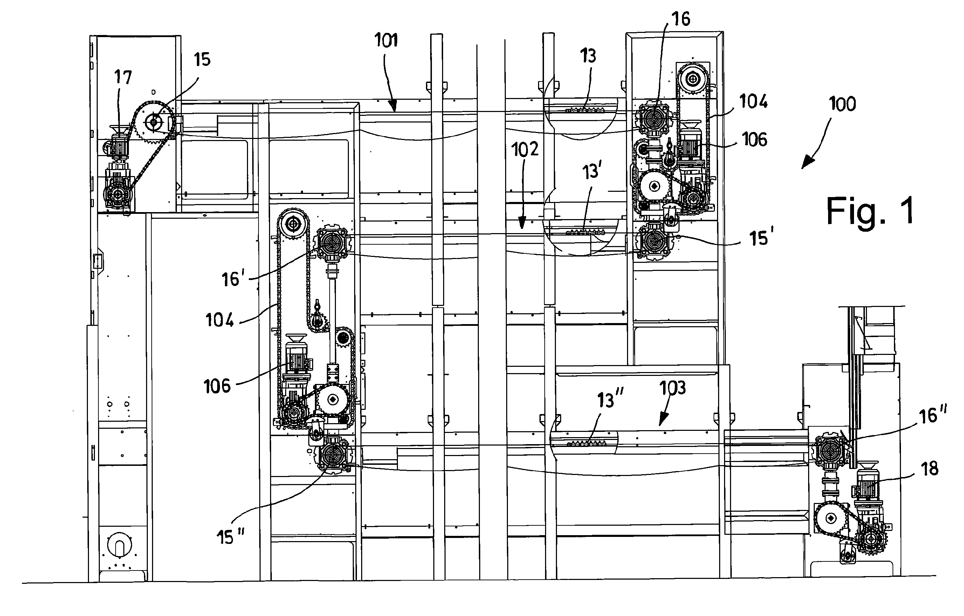

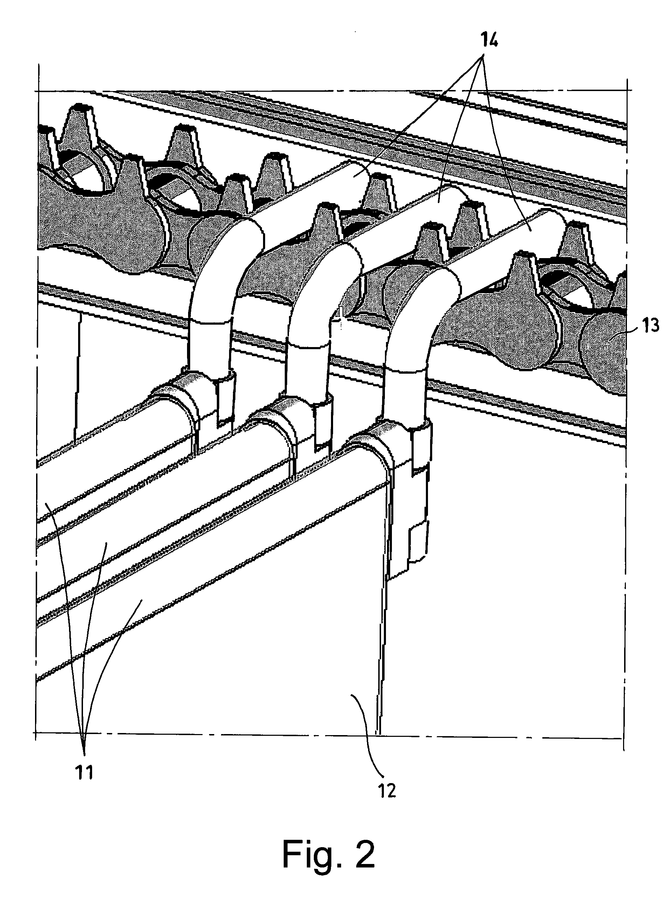

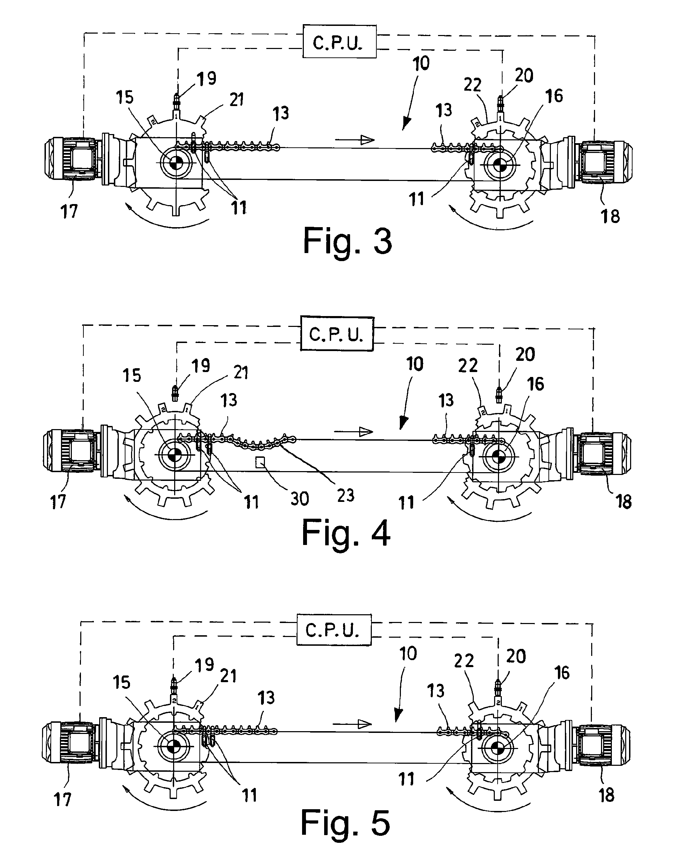

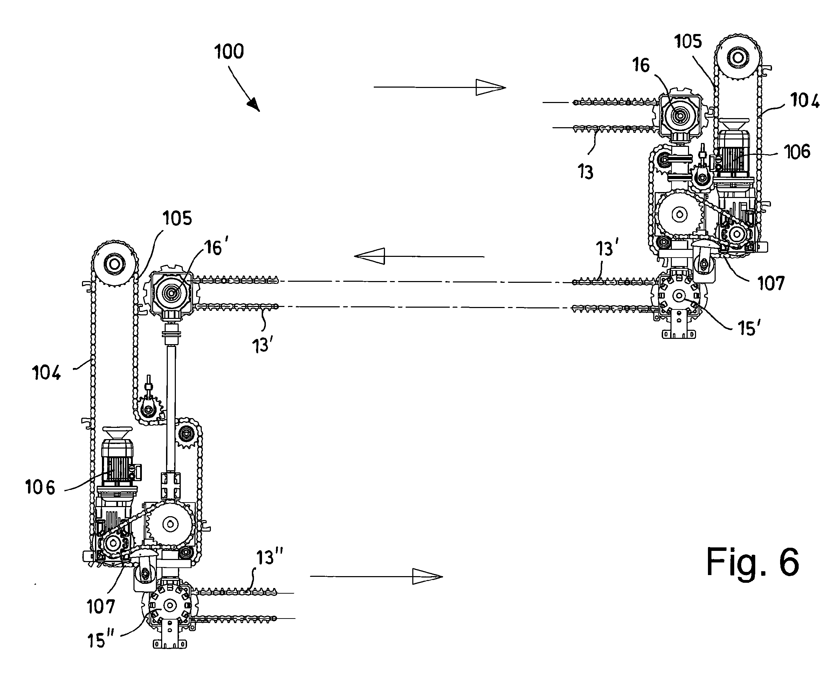

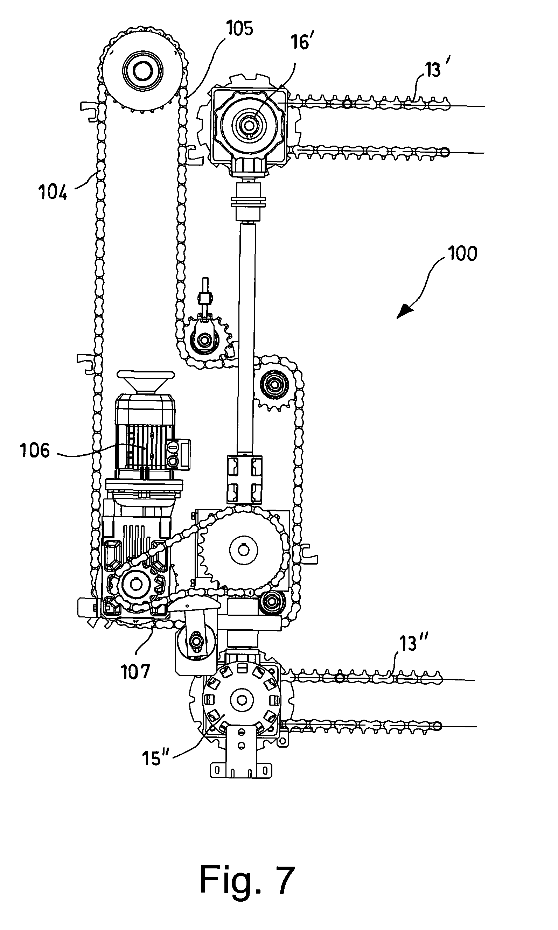

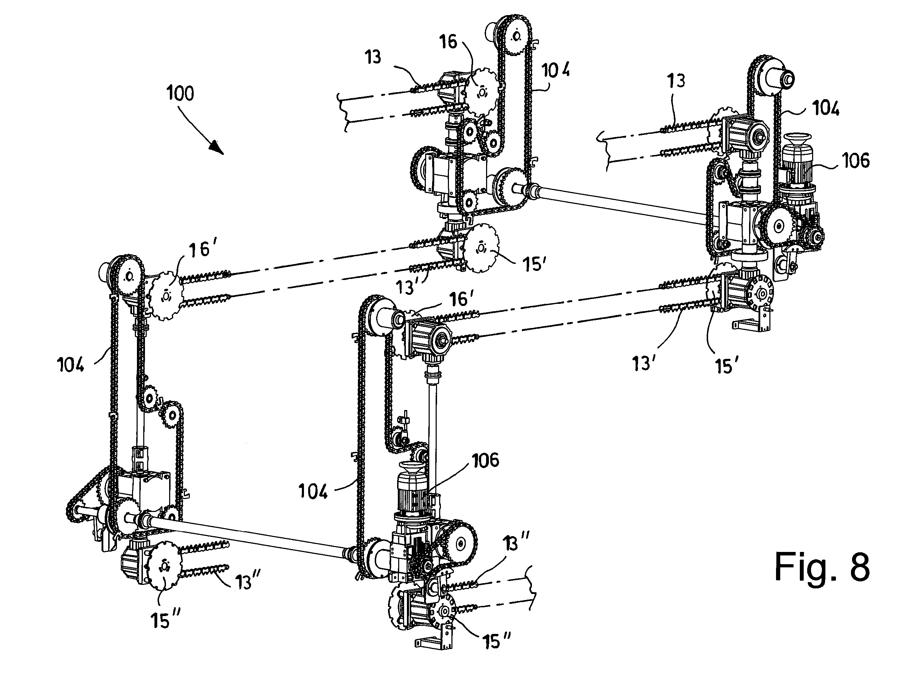

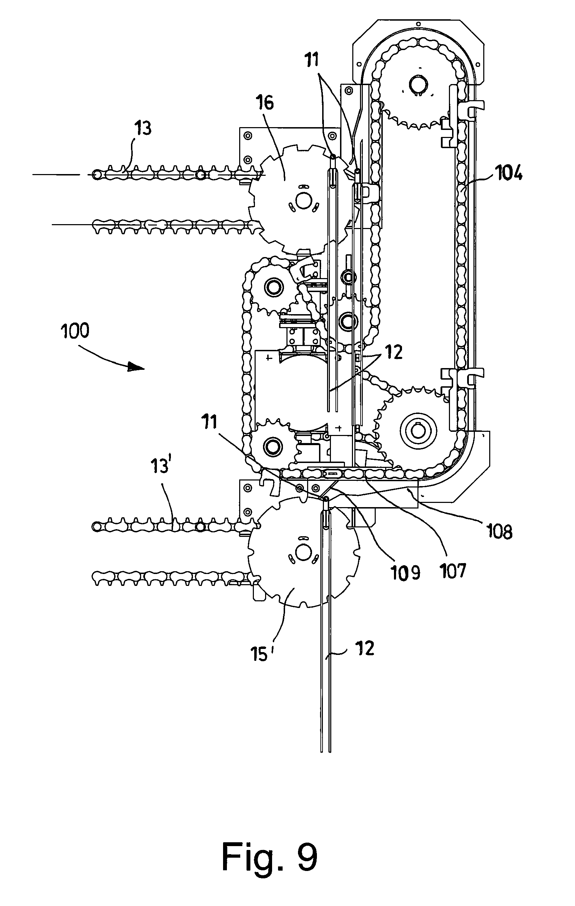

The characteristics and advantages of the invention will become clearer from the following description, given as an example and not for limiting purposes, referring to the attached schematic drawings, in which: figure 1 is a schematic view of a multi-plane drying apparatus with advancing groups using a chain according to the present invention; figure 2 shows the coupling detail of an end of canes with a chain; figures 3-5 show steps of the restoration of phasing of the pinions of an advancing tract using a chain according to the present invention; figures 6-9 show the particular transportation means of the chains from one advancing tract to the other. With reference to the figures, a group for moving drying canes for long pasta according to the present invention is shown with 10 and a drying apparatus with such a group is shown with 100.

The moving group 10 of drying canes 11 for long pasta 12 according to the invention is of the type comprising at least one mobile chain 13 wrapped between a first 15 and a second pinion 16 for receiving an end 14 of the canes 11 where at least one pinion 15 is motorized 17 independently with respect to the other pinion 16, possibly also equipped with an independent motorization 18.

Of course, there are provided analogous chains 13', 13" and analogous pinions 15', 16', 15", 16" parallel to those quoted above for moving and supporting the canes 11 in the lower planes of the apparatus 100; such parallel pinions can also have the same motorization as the pinions 15, 16 or they can be of the type set in rotation.

In particular, according to the invention, the group 10 comprises cyclical means for controlling and mutually phasing the angular position of the first pinion 15 with respect to the second pinion 16.

In this way, it is ensured that there is synchronisation between loading and discharging of the canes 11 as well as, thanks to the fact that such phasing takes place cyclically at very short intervals, it not being necessary to intervene periodically on the machine to restore the initial conditions that, advantageously, are restored automatically.

According to the examples shown in the figures the second pinion is also motorized 18 independently with respect to the first pinion 15.

Again in the same example, the cyclical phasing means of the angular position of the first pinion 15 with respect to the second pinion 16 comprise sensors 19, 20 associated with the pinions 15, 16 for cyclically and independently reading the angular position of the first pinion 15 with respect to the second 16 during the advancing of the chain 13.

The sensors 19, 20 are connected to the motorizations 17, 18, by means of a control centre or cpu schematised in the figures, in order to control the cyclical phasing of the pinions 15, 16.

For example, such sensors are electromagnetic sensors and collaborate with star circular elements 21, 22 formed on the pinions 15, 16.

Basically, the sensors 19, 20 record every passage of the points of the stars 21, 22 of the two pinions independently and through comparison they have the possibility of checking whether a pinion 16 is behind or in front with respect to the other 15.

In this case, they control the motorizations 17, 18 so that they correct such a lack of synchronisation.

The ways with which the return into phase of the pinions 15 16 is carried out will be detailed hereafter.

Therefore, thanks to the invention, on the one hand there is guaranteed kinematic independence of the various advancing environments with maximum technological flexibility necessary to manage transient or emergency situations, and on the other hand there is no need for interventions for maintenance or restoring the phases correctly set during the initial working set-up.

Even possible natural elongations of the chain 13 can be corrected by the present invention.

Indeed, sacs 23 are provided for temporarily containing the extra-elongation of the chain 13 where such a sac 23 is also equipped with a sensor 30 connected to the cyclical means for controlling and for mutual phasing of the pinions.

In this way, when a threshold elongation has been reached, the sensor 30 can control the motorizations 17, 18 of the pinions 15, 16 to compensate for such elongation and take the chain 13 back under tension in the tract where it transports the canes 11.

Up to now the advantages of the invention with reference to just one tract of chain 13 have been described, but, equally if not in a further amplified manner, such advantages are also found in a drying apparatus 100 comprising at least two advancing tracts 101, 102, 103 of canes 11 for drying long pasta 12.

As shown, there can be three advancing tracts 101, 102, 103 arranged on different planes and where each of which comprises at least one mobile chain wrapped between a first and a second pinion.

In particular, at least one advancing tract comprises the pinions 15 and 16 as described earlier and connected to the pinions of the other planes 15', 16', 15", 16" in a mechanical manner as can be seen in the figures.

In this case, i.e. multi-plane apparatuses, particular and innovative means for transferring the canes 11 in movement from one advancing plane 101 to the other 102 are also provided.

These transfer means, which are innovative even autonomously with respect to the phasing means of the pinions, comprise a transfer chain 104 motorized 106 independently with respect to the return pinions of the chain 13 and wrapped so as to comprise a vertical tract for collecting 105 the canes 11 and a horizontal tract for releasing 107 the same 11.

This releasing tract 107 is equipped with a lower abutment plane 108 and with a front barrier element 109 for stopping the canes 11 during the releasing step.

In particular, the barrier 109 and the plane 108 make it possible to discharge the canes 11 on the pinion without danger of jamming and blocks holding the cane until discharge.

It is totally easy to understand how the group for moving drying canes of long pasta object of the invention operates.

The control of the movement of the canes 13 indeed comprises the steps of:
a) supplying the canes on the chain 13 at the first pinion 15;
b) moving the chain 13 to transport the canes 11 towards the second pinion 16
c) discharging the canes 11 from the chain 13 at the second pinion 16;

Moreover, according to the invention, the following steps are carried out:
d) checking, i.e. detecting and comparing, the angular position of the first pinion 15 with respect to the second pinion 16 during the advancing of the chain 13; and
e) cyclically phasing the angular position of the first pinion 15 with respect to the second pinion 16 as a function of the comparison described above. Substantially, there can be at least three ways to take the pinions 15, 16 back in phase, i.e.:
   - temporarily stopping one of the pinions allowing the other to advance; - temporarily accelerating or slowing down one of the pinions allowing the other to advance with constant angular speed;
   - temporarily accelerating or slowing down both of the pinions 15, 16.

In the case of an apparatus with many planes of chain 13 such phasing also takes place along distinct advancing tracts identifying a "master" reference pinion and many "slave" pinions on the various advancing planes following the master pinion.

In this way there is "self-adapting" or "self- correcting" continuous motion of all of the chains of the mechanical transmission of the line.

It has thus been seen that the group and the method for moving drying canes for long pasta and the drying apparatus with such a group according to the present invention achieve the purposes outlined earlier.

Indeed, the group and the method for moving drying canes for long pasta and the drying apparatus with such a group offers kinematic independence of the various advancing environments, ensuring the maximum technological flexibility necessary to manage emergency or transient situations, without requiring several interventions for maintenance or resetting of the initial work conditions.

The group for moving drying canes for long pasta and the drying apparatus with such a group thus conceived can undergo numerous modifications and variants; moreover, all of the details can be replaced by technically equivalent elements. In practice, the materials used, as well as their sizes, can be whatever according to the technical requirements.

## Claims

1. Group for moving (10) drying canes (11) for long pasta (12) supplied one after the other, said moving group (10) being of the type comprising at least a mobile chain (13) wrapped between a first (15) and a second pinion (16) for receiving an end (14) of said canes (11), said first pinion (15) being motorized (17) independently with respect to said second pinion (16), **characterized in that** said group moreover comprises means for cyclically controlling and automatically adjusting the phase of the mutual angular position of said first pinion (15) with respect to said second pinion (16).

2. Group (10) according to claim 1 **characterized in that** said second pinion is also motorized (18) independently with respect to said first pinion (15).

3. Group (10) according to any preceding claims **characterized in that** said cyclical means for controlling and mutually phasing the angular position of said first pinion (15) with respect to said second pinion (16) comprise sensors (19, 20) associated with said pinions (15, 16) for cyclically and independently reading the angular position of said first pinion (15) with respect to said second pinion (16), said sensors (19, 20) being connected to said motorizations (17, 18) in order to control the cyclical phasing of said pinions (15, 16).

4. Group (10) according to claim 3 **characterized in that** said sensors are electromagnetic sensors and said pinions (15, 16) comprise star circular rings (21, 22) facing said sensors (19, 20).

5. Group (10) according to any preceding claims **characterized in that** it comprises extra-elongating sacs (23) for containing said at least a chain (13), said sac (23) being provided with a sensor (30) connected with said mutually phasing means of said pinions (15, 16).

6. Method for moving canes (11) for drying long pasta (12) supplied one after the other on a mobile chain (13) wrapped between a first (15) and a second pinion (16), wherein at least one pinion (15) is motorized (17) independently with respect to the other pinion (16), said method comprising the steps of:
a) supplying said canes on said chain (13) at said first pinion (15);
b) moving said chain (13) in order to transport said canes (11) from a first (15) to a second pinion (16);
c) discharging said canes (11) from said chain (13) at said second pinion (16);
**characterized in that** said step of moving said canes comprises the steps of:
d) detecting and comparing the angular position of said first pinion (15) with respect to said second pinion (16) during the advancement of said chain (13); and
e) cyclically and automatically adjusting the phase of the angular position of said first pinion (15) with respect to said second pinion (16) according to the comparison performed in the step d).

7. Method according to claim 6 **characterized in that** said angular phasing step of a pinion (15) with respect to the other consists in temporarily stopping one of said pinions leaving the other to advance.

8. Method according to claim 6 **characterized in that** said angular phasing step of one pinion (15) with respect to the other consists in temporarily accelerating or slowing one of said pinions leaving the other to advance with constant angular speed.

9. Method according to claim 6 **characterized in that** said angular phasing step of one pinion (15) with respect to the other (16) consists in temporarily accelerating or slowing down both said pinions (15, 16).

10. Drying apparatus (100) comprising a group provided with at least two advancing tracts (101, 102, 103) of canes (11) for drying long pasta (12) supplied one after the other, said at least two advancing tracts (101, 102, 103) being arranged on different planes and each comprises at least a mobile chain (13) wrapped between a first charging pinion (15) and a second discharging pinion (16) one pinion (15) of which is motorized (17) independently with respect to the other pinion (16), means for transferring said canes (11) moving from an advancing plane (101) to the other (102) being provided, **characterized in that** at least one of said advancing tracts (101, 102, 103) comprises cyclical means for controlling and mutually phasing the angular position of said first pinion (15) with respect to said second pinion (16).

11. Apparatus (100) according to claim 10 **characterized in that** said transferring means of said canes (11) moving from an advancing tract (101) to the other (102) comprise a motorized transferring chain (104) (106) independently with respect to said pinions (15, 16) and wrapped so as to comprise a vertical tract for collecting (105) said canes (11) and a horizontal tract for releasing (107) the same (11), said releasing tract (107) being provided with a lower abutment plane (108) and with a front barrier element (109) for stopping said canes (11) during the releasing step.

12. Apparatus (100) according to claim 10 **characterized in that** said second pinion is also motorized (18) independently with respect to said first pinion (15).

13. Apparatus (100) according to claim 10, 11 or 12 **characterized in that** said cyclical means for controlling and mutually phasing the angular position of said first pinion (15) with respect to said second pinion (16) comprise sensors (19, 20) associated with said pinions (15, 16) for angular independent cyclical reading of said first pinion (15) with respect to said second pinion (16), said sensors (19, 20) being connected to said motorizations (17, 18) to control the cyclical phasing of said pinions (15, 16).

14. Apparatus (100) according to claim 13 **characterized in that** said sensors are electromagnetic sensors and **in that** said pinions (15, 16) comprise star circular rings (21, 22) facing said sensors (19, 20).

15. Apparatus (100) according to any preceding claims 10-14 **characterized in that** it comprises extra-elongating sacs (23) for containing said at least a chain (13), said sac (23) being provided with a sensor (30) connected to said cyclical means for mutual phasing said pinions (15, 16).

## Patentansprüche

1. Anordnung zum Bewegen (10) von Trocknungsstangen (11) für lange Pasta (12), die nacheinander zugeführt werden, wobei diese Bewegungsanordnung (10) des Typs ist, der mindestens eine bewegliche Kette (13) umfasst, die zwischen ein erstes (15) und ein zweites Ritzel (16) zum Aufnehmen eines Endes (14) der Stangen (11) gewickelt ist, wobei das erste Ritzel (15) unabhängig vom zweiten Ritzel (16) motorisiert (17) ist, **dadurch gekennzeichnet, dass** diese Anordnung ferner Mittel zum zyklischen Kontrollieren und automatischen Anpassen der Phase der gegenseitigen Winkelstellung zwischen dem ersten Ritzel (15) und dem zweiten Ritzel (16) umfasst.

2. Anordnung (10) nach Anspruch 1, **dadurch gekennzeichnet, dass** das zweite Ritzel ebenfalls unabhängig vom ersten Ritzel (15) motorisiert (18) ist.

3. Anordnung (10) nach einem der vorhergehenden Ansprüche, **dadurch gekennzeichnet, dass** die zyklischen Mittel zum Kontrollieren und gegenseitigen Synchronisieren der Winkelstellung des ersten Ritzels (15) gegenüber dem zweiten Ritzel (16) Sensoren (19, 20) umfassen, die mit den Ritzeln (15, 16) verbunden sind, um die Winkelstellung des ersten Ritzels (15) gegenüber dem zweiten Ritzel (16) zyklisch und unabhängig abzutasten, wobei diese Sensoren (19, 20) mit den Motorisierungen (17, 18) verbunden sind, um die zyklische Synchronisation der Ritzel (15, 16) zu steuern.

4. Anordnung (10) nach Anspruch 3, **dadurch gekennzeichnet, dass** die Sensoren elektromagnetische Sensoren sind und die Ritzel (15, 16) Sternkreisringe (21, 22) umfassen, die den Sensoren (19, 20) zugewandt sind.

5. Anordnung (10) nach einem der vorhergehenden Ansprüche, **dadurch gekennzeichnet, dass** sie Überlängungssäcke (23) zum Enthalten der mindestens einen Kette (13) umfasst, wobei dieser Sack (23) mit einem Sensor (30) versehen ist, der mit den Mitteln zur gegenseitigen Synchronisation der Ritzel (15, 16) verbunden ist.

6. Verfahren zum Bewegen von Stangen (11) zum Trocknen von langer Pasta (12), die nacheinander auf einer beweglichen Kette (13) zugeführt werden, die zwischen ein erstes (15) und ein zweites Ritzel (16) gewickelt ist, wobei mindestens ein Ritzel (15) unabhängig vom anderen Ritzel (16) motorisiert (17) ist, wobei dieses Verfahren die folgenden Schritte umfasst:
a) Zuführen der Stangen auf der Kette (13) zum ersten Ritzel (15);
b) Bewegen der Kette (13), um die Stangen (11) von einem ersten (15) zu einem zweiten Ritzel (16) zu befördern;
c) Entladen der Stangen (11) von der Kette (13) beim zweiten Ritzel (16);
**dadurch gekennzeichnet, dass** der Schritt des Bewegens der Stangen die folgenden Schritte umfasst:
d) Detektieren und Vergleichen der Winkelstellung des ersten Ritzels (15) gegenüber dem zweiten Ritzel (16) während des Vorschubs der Kette (13); und
e) zyklisches und automatisches Anpassen der Phase der Winkelstellung des ersten Ritzels (15) gegenüber dem zweiten Ritzel (16) gemäß dem bei Schritt d) vorgenommenen Vergleich.

7. Verfahren nach Anspruch 6, **dadurch gekennzeichnet, dass** der Schritt der Winkelsynchronisation eines Ritzels (15) gegenüber dem anderen darin besteht, dass eines dieser Ritzel zeitweise angehalten wird und das andere vorrücken gelassen wird.

8. Verfahren nach Anspruch 6, **dadurch gekennzeichnet, dass** der Schritt der Winkelsynchronisation von einem Ritzel (15) gegenüber dem anderen darin besteht, dass eines dieser Ritzels zeitweise beschleunigt oder verlangsamt wird und das andere mit einer konstanten Winkelgeschwindigkeit vorrücken gelassen wird.

9. Verfahren nach Anspruch 6, **dadurch gekennzeichnet, dass** der Schritt der Winkelsynchronisation von einem Ritzel (15) gegenüber dem anderen (16) darin besteht, dass diese Ritzel (15, 16) beide zeitweise beschleunigt oder verlangsamt werden.

10. Trocknungsvorrichtung (100), die eine Anordnung mit mindestens zwei Vorschubbahnen (101, 102, 103) von Stangen (11) zum Trocknen von langer Pasta (12) umfasst, die nacheinander zugeführt werden, wobei diese mindestens zwei Vorschubbahnen (101, 102, 103) auf verschiedenen Ebenen angeordnet sind und jeweils mindestens eine bewegliche Kette (13) umfassen, die zwischen ein erstes Laderitzel (15) und ein zweites Entladeritzel (16) gewickelt ist, wobei ein Ritzel (15) von diesen unabhängig vom anderen Ritzel (16) motorisiert (17) ist, wobei Mittel zum Transferieren der Stangen (11) vorgesehen sind, die sich von einer Vorschubebene (101) zur anderen (102) bewegen, **dadurch gekennzeichnet, dass** mindestens eine der Vorschubbahnen (101, 102, 103) zyklische Mittel zum Kontrollieren und gegenseitigen Synchronisieren der Winkelstellung des ersten Ritzels (15) gegenüber dem zweiten Ritzel (16) umfasst.

11. Vorrichtung (100) nach Anspruch 10, **dadurch gekennzeichnet, dass** die Transfermittel der Stangen (11), die sich von einer Vorschubbahn (101) zur anderen (102) bewegen, eine motorisierte Transferkette (104) (106) umfassen, die unabhängig von den Ritzeln (15, 16) und so gewickelt ist, dass sie einen vertikalen Abschnitt zum Aufnehmen (105) der Stangen (11) und einen horizontalen Abschnitt zum Abgeben (107) derselben (11) umfasst, wobei der Abgabeabschnitt (107) mit einer unteren Auflagefläche (108) und mit einem vorderen Barriereelement (109) zum Stoppen der Stangen (11) während des Abgabeschritts versehen ist.

12. Vorrichtung (100) nach Anspruch 10, **dadurch gekennzeichnet, dass** das zweite Ritzel ebenfalls unabhängig vom ersten Ritzel (15) motorisiert (18) ist.

13. Vorrichtung (100) nach Anspruch 10, 11 oder 12, **dadurch gekennzeichnet, dass** die zyklischen Mittel zum Kontrollieren und gegenseitigen Synchronisieren der Winkelstellung des ersten Ritzels (15) gegenüber dem zweiten Ritzel (16) Sensoren (19, 20) umfassen, die mit den Ritzeln (15, 16) für die winklige unabhängige zyklische Abtastung des ersten Ritzels (15) in Bezug auf das zweite Ritzel (16) verbunden sind, wobei diese Sensoren (19, 20) mit den Motorisierungen (17, 18) verbunden sind, um die zyklische Synchronisation der Ritzel (15, 16) zu steuern.

14. Vorrichtung (100) nach Anspruch 13, **dadurch gekennzeichnet, dass** die Sensoren elektromagnetische Sensoren sind und die Ritzel (15, 16) Sternkreisringe (21, 22) umfassen, die den Sensoren (19, 20) zugewandt sind.

15. Vorrichtung (100) nach einem der vorhergehenden Ansprüche von 10 bis 14, **dadurch gekennzeichnet, dass** sie Überlängungssäcke (23) zum Enthalten der mindestens einen Kette (13) umfasst, wobei dieser Sack (23) mit einem Sensor (30) versehen ist, der mit den zyklischen Mitteln zur gegenseitigen Synchronisation der Ritzel (15, 16) verbunden ist.

## Revendications

1. Groupe (10) pour déplacer des barres de séchage (11) pour des pâtes longues (12) alimentées l'une après l'autre, ledit groupe de déplacement (10) étant du type comprenant au moins une chaîne mobile (13) enroulée entre un premier (15) et un deuxième pignon (16) pour recevoir une extrémité (14) desdites barres (11), ledit premier pignon (15) étant motorisé (17) indépendamment par rapport audit deuxième pignon (16), **caractérisé en ce que** ledit groupe comprend en outre des moyens pour commander de manière cyclique et régler de manière automatique la phase de la position angulaire mutuelle dudit premier pignon (15) par rapport audit deuxième pignon (16).

2. Groupe (10) selon la revendication 1, **caractérisé en ce que** ledit deuxième pignon est également motorisé (18) indépendamment par rapport audit premier pignon (15).

3. Groupe (10) selon l'une quelconque des revendications précédentes, **caractérisé en ce que** lesdits moyens cycliques de commande et de mise en phase mutuelle de la position angulaire dudit premier pignon (15) par rapport audit deuxième pignon (16) comprend des capteurs (19, 20) associés auxdits pignons (15, 16) pour lire de manière cyclique et indépendante la position angulaire dudit premier pignon (15) par rapport audit deuxième pignon (16), lesdits capteurs (19, 20) étant connectés auxdites motorisations (17, 18) de manière à commander la mise en phase cyclique desdits pignons (15, 16).

4. Groupe (10) selon la revendication 3, **caractérisé en ce que** lesdits capteurs sont des capteurs électromagnétiques et lesdits pignons (15, 16) comprennent des anneaux circulaires en étoile (21, 22) faisant face auxdits capteurs (19, 20).

5. Groupe (10) selon l'une quelconque des revendications précédentes, **caractérisé en ce qu'**il comprend des sacs d'extra-allongement (23) pour contenir ladite au moins une chaîne (13), ledit sac (23) étant muni d'un capteur (30) connecté auxdits moyens de mise en phase mutuelle desdits pignons (15, 16).

6. Procédé pour déplacer des barres (11) pour le séchage de pâtes longues (12) alimentées l'une après l'autre sur une chaîne mobile (13) enroulée entre un premier (15) et un deuxième pignon (16), dans lequel au moins un pignon (15) est motorisé (17) indépendamment par rapport à l'autre pignon (16), ledit procédé comprenant les étapes consistant à :
a) l'alimentation desdites barres sur ladite chaîne (13) au niveau dudit premier pignon (15) ;
b) déplacer ladite chaîne (13) de manière à transporter lesdites barres (11) d'un premier (15) à un deuxième pignon (16) ;
c) décharger lesdites barres (11) de ladite chaîne (13) au niveau dudit deuxième pignon (16) ;
**caractérisé en ce que** ladite étape de déplacement desdites barres comprend les étapes consistant à :
d) détecter et comparer la position angulaire dudit premier pignon (15) par rapport audit deuxième pignon (16) durant l'avance de ladite chaîne (13) ; et
e) régler de manière cyclique et automatique la phase de la position angulaire dudit premier pignon (15) par rapport audit deuxième pignon (16) en fonction de la comparaison effectuée dans l'étape d).

7. Procédé selon la revendication 6, **caractérisé en ce que** ladite étape de mise en phase angulaire d'un pignon (15) par rapport à l'autre consiste à arrêter temporairement un desdits pignons en laissant l'autre avancer.

8. Procédé selon la revendication 6, **caractérisé en ce que** ladite étape de mise en phase angulaire d'un pignon (15) par rapport à l'autre consiste à accélérer ou ralentir temporairement un desdits pignons en laissant l'autre avancer avec une vitesse angulaire constante.

9. Procédé selon la revendication 6, **caractérisé en ce que** ladite étape de mise en phase angulaire d'un pignon (15) par rapport à l'autre (16) consiste à accélérer ou ralentir temporairement les deux dits pignons (15, 16).

10. Dispositif de séchage (100) comprenant un groupe muni d'au moins deux étendues de déplacement en avant (101, 102, 103) de barres (11) pour le séchage de pâtes longues (12) alimentées l'une après l'autre, lesdites au moins deux étendues de déplacement en avant (101, 102, 103) étant agencées sur des plans différents et comprennent chacune au moins une chaîne mobile (13) enroulée entre un premier pignons de chargement (15) et un deuxième pignon de déchargement (16), desquels un pignon (15) est motorisé (17) indépendamment par rapport à l'autre pignon (16), des moyens pour transférer lesdites barres (11) en mouvement d'un plan de déplacement en avant (101) à l'autre (102) étant prévus, **caractérisé en ce qu'**au moins une desdites étendues de déplacement en avant (101, 102, 103) comprend des moyens cycliques pour commander et mettre en phase mutuellement la position angulaire dudit premier pignon (15) par rapport audit deuxième pignon (16).

11. Dispositif (100) selon la revendication 10, **caractérisé en ce que** lesdits moyens de transfert desdites barres (11) en mouvement d'une étendue de déplacement en avant (101) à l'autre (102) comprennent une chaîne de transfert motorisée (104) (106) indépendamment par rapport auxdits pignons (15, 16) et enroulée de manière à comprendre une étendue verticale pour recueillir (105) lesdites barres (11) et une étendue horizontale pour libérer (107) celles-ci (11), ladite étendue de libération (107) étant munie d'un plan de buté inférieur (108) et d'un élément de barrière avant (109) pour arrêter lesdites barres (11) durant l'étape de libération.

12. Dispositif (100) selon la revendication 10, **caractérisé en ce que** ledit deuxième pignon est également motorisé (18) indépendamment par rapport audit premier pignon (15).

13. Dispositif (100) selon la revendication 10, 11 ou 12, **caractérisé en ce que** lesdits moyens cycliques de commande et de mise en phase mutuelle de la position angulaire dudit premier pignon (15) par rapport audit deuxième pignon (16) comprend des capteurs (19, 20) associés auxdits pignons (15, 16) pour une lecture cyclique indépendante angulaire dudit premier pignon (15) par rapport audit deuxième pignon (16), lesdits capteurs (19, 20) étant connectés auxdites motorisations (17, 18) de manière à commander la mise en phase cyclique desdits pignons (15, 16).

14. Dispositif (100) selon la revendication 13, **caractérisé en ce que** lesdits capteurs sont des capteurs électromagnétiques et **en ce que** lesdits pignons (15, 16) comprennent des anneaux circulaires en étoile (21, 22) faisant face auxdits capteurs (19, 20).

15. Dispositif (100) selon l'une quelconque des revendications précédentes 10 à 14, **caractérisé en ce qu'**il comprend des sacs d'extra-allongement (23) pour contenir ladite au moins une chaîne (13), ledit sac (23) étant muni d'un capteur (30) connecté auxdits moyens cycliques pour la mise en phase mutuelle desdits pignons (15, 16).
